# EUROPEAN PATENT APPLICATION

(11) **EP 3 907 202 A1**
(43) Date of publication of application: **10.11.2021**
(21) Application number: 20173350.8
(22) Date of filing: 06.05.2020
(51) Int. Cl.: C04B 2/04, C04B 2/06, C04B 40/00

(54) **READY-TO-USE POWDER FORMULATION FOR MAKING A HIGHLY REACTIVE, HIGH SOLIDS MILK OF LIME**

(71) Applicant: S.A. Lhoist Recherche et Développement, 1342 Ottignies-Louvain-la-Neuve (BE)
(72) Inventor: GÄRTNER, Robert Sebastian, 1501 Buizingen (BE); BALLARD, Deborah A., Fort Worth, TX 76135 (US); KRAMADHATI, Narahari N., La Habra, CA 90631 (US); SCHANTZ, Michael D., Louisville, CO 80027 (US); LIGNER, Emanuelle, 7334 Villerot (BE)
(74) Representative: Calysta NV

(57) **Abstract**

Ready-to-use powder formulation and its manufacturing process for making a high solids highly reactive milk of lime with improved stability and settling, comprising particles of high calcium lime, an organic stabilizing agent in C₄ to C₁₈ bearing one or more hydroxyl group(s) at an amount from 0.3 to 5wt% and a dispersant polymer at an amount of 0.03 to 1.0wt%, and containing at least 90wt% of high calcium lime, said ready-to-use powder formulation having a d₉₇ ≤ 40µm and a d₅₀ comprised between 2 and 15µm.

## Description

The present invention relates to a ready-to-use powder formulation for making a highly reactive, high solids milk of lime having an improved viscosity and settling stability and to its manufacturing process.

Lime is a calcium-magnesium based compound herein after called calcium-based compound.

Calcium based compounds such as CaO and Ca(OH)₂ have many practical uses. For instance, these substances are used in treating drinking water, wastewater and sewage, industrial streams, in flue gase cleaning, as soil neutralizing agents and nutrients, for ground stabilization for construction, and as components of building materials or as strong base or calcium-source chemicals.

"Quicklime" is an industrial product mainly made of calcium oxide, i.e. CaO and some impurities at a level of a few %, while "hydrated lime" is an industrial product mainly made of calcium hydroxide, i.e. Ca(OH)₂ and some impurities at a level of a few %, both sometimes being informally referred to as "lime". Quicklime is usually in the form of lumps or pebbles but it can also be a powder. Dry hydrated lime is usually a powder. In the further, we will refer to quicklime by its main component, CaO, and to hydrated lime by its main component, Ca(OH)₂.

The slaking reaction is a heavily exothermic reaction and is chemically as follows:

CaO + H₂O → Ca(OH)₂

In order to further process these compounds and improve the ease, with which they are handled, dry CaO or dry Ca(OH)₂ are often mixed with water to form an aqueous suspension, i.e., a slurry, called milk of lime, which is a fluid suspension of slaked lime, also called hydrated lime, which will inevitably include some impurities, in particular silica, alumina, unburnt limestone (CaCO₃), magnesium oxide or magnesium hydroxide to the extent of a few percent.

Such a suspension is obtained either by slaking quicklime (calcium oxide-CaO) with a large excess of water, or by mixing hydrated lime with water.

The resulting aqueous suspensions are characterized by the concentration of the mass of the solid matter (% solids), the chemical reactivity of the slurry to neutralize an acid and the distribution of the sizes of the particles in suspension (strongly influencing the suspension viscosity and settling behavior).

These characteristics determine the properties of the slurry, mainly its viscosity and its reactivity.

When a milk of lime is obtained from hydrated lime, hydrated lime particles are suspended in water. The hydrated lime is produced by common atmospheric hydrators, which may or may not have size classifying systems, where water is added to quicklime, possibly in a pre-mixer, at a specific mass ratio and allowed to mix together with said water. The particle size distribution will vary depending upon the nature of the quicklime starting material used, the applied process conditions, as well as from the manufacturing process (presence of a size classifying system or not, presence of a screening or milling system). Milk of lime made from hydrated lime will have a particle size distribution similar to that of the hydrate from which it is produced and the solids content can vary from 5 to 50 w %.

Milk of lime made from quicklime, in a commercial, continuous process, is notably produced by common tank reactors or by special paste, detention, or ball mill slakers (Boyton, 1980). In all cases, quicklime is added to an excess amount of water and mixed together, to produce slurry with a solid content ranging from 5 to 50 w %. The water reacts with the quicklime particles during the slaking operation in an exothermic reaction to form slaked lime. During the atmospheric slaking of quicklime with an excess of water, the temperature of hydration is below 100° C. (212° F.). The particle size distribution of the milk of lime is a function of both the nature of the quicklime, the slaking process conditions and the coarse fraction removal systems, which include screening, settling and milling.

Lime slurries can be made either in batches or in a continuous process. The process of slaking and its resulting milk-of-lime qualities are widely used industrially across many industries and as a result reasonably well understood.

Of course, the biggest demand for ready-to-use milk-of-lime on the market involves high solid concentration slurries since shipping milk of lime involves a lot of water transportation. Unfortunately, high solid concentration slurries are viscous and more difficult to handle since viscosity typically increases quite rapidly, especially when the milk of lime is very reactive, meaning that it contains hydrated lime with fine particle size.

WO2006/050567 discloses milk of lime containing dispersant and viscosity modifiers, which can be added to an aqueous slurry or paste of lime to lower the viscosity and improve the flow characteristics of the slurry which in turn makes the high-solids product easier to handle. According to this document, the milk of lime comprises polycarboxylate dispersants and carbohydrate dispersants. Preferably, the dispersant comprises a polycarboxylate dispersant in combination with a carbohydrate dispersant with a non-volatile weight ratio of the polycarboxylate dispersant to carbohydrate dispersant is in the ratio 1 :20 to 10:1, more preferably 1:20 to 1:1.

The recited carbohydrates in WO2006/050567 which have been found to be suitable for lowering the viscosity of calcium hydroxide aqueous slurries comprise aldoses, saccharides, disaccharides, polysaccharides and synthetic derivatives from such precursors, for example, glycerol, sorbitol, mannitol, gluconic, citric, isocitric, lactic, tartaric acids and salts thereof, dextrose, maltose, glucose, lactose, saccharose, maltotriose, maltotetraose, both alpha and beta glucoheptonic acids and salts thereof. Many of these are commercially available in syrup form, e.g., glucose syrup and corn syrup. Carbohydrates are compounds of carbon, hydrogen, and oxygen that contain the saccharose unit or its first reaction product 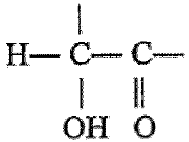 and in which the ratio of hydrogen to oxygen is the same as in water.

Polycarboxylate dispersants useful according to WO2006/050567 are molecules or polymers that contain multiple carboxyl (COOH) groups which can form salts with metals and amine, such as styrene maleic anhydride copolymers in the form of their sodium or other alkali metal salts. Generally, excellent performance is achieved when the polycarboxylate dispersant is in the form of an addition copolymer. Suitable copolymers include salts of polyether polycarboxylates. These may be formed from acrylic acid and hydrophilic polyalkylene oxides such as polyethylene and polypropylene oxides. An example of such a copolymer is Ethacryl(R) G from Lyondell Chemie Nederland B. V. This is a polyether polycarboxylate, sodium salt supplied as a 40% aqueous solution.

According to WO2006/050567, both the carbohydrate dispersant and polycarboxylate dispersant have been added to the slaking water before adding the quicklime in the water. The viscosity was stable for about 48 hours (i.e. meaning that viscosity was not increasing above 1000 mPa.s (cP).

Unfortunately, such milk of lime can settle over time and document EP1999082 deals with this issue.

Indeed document EP1999082 discloses milk of lime having a great fineness and a dry matter content between 1 and 60 wt% having rheological properties maintained in time (such as dynamic viscosity, shearing yield or plastic viscosity) at levels compatible with their utilization, implementation, handling in time in stationary, dynamic or mixed conditions. According to this document, this aim is achieved in a milk of lime by the addition of one or several additives chosen among carbohydrates or some of their derivates, such as the ones obtained by oxidation or by hydrogenation of these carbohydrates.

The milk of lime according to EP 1999082 can be obtained by slaking calcic lime and/or dolomitic lime in water, by suspending in water hydrated lime and/or hydrated dolomitic lime in powder or even by dilution of calcium and/or magnesium hydrate paste or calcic and/or dolomitic lime paste in water. The additives are disclosed to be added anywhere in the process (to the quicklime, to the hydrated lime, before, during or after the slaking process or dilution process or even to the slaking water being the illustrated way in the examples). The resulting milk of lime shows a viscosity below 2000 mPa.s (cP) (as measured with a Haake Rotovisco RT20 viscosimeter at a shearing speed of 5 s⁻¹), preferably below 1500 mPa.s, at best below 1200 mPa.s after an ageing period of 12 hours under agitation at 600 rpm.

The possible additives according to EP 1999082 are chosen from the long list made by erythrose, threose, xylose, ribose, allose, glucose, galactose, fructose, mannose, sucrose, lactose, maltose, trehalose, starch, modified starch, hydrolysed starch, glycogen, inuline, modified inuline, cellulose, modified cellulose, pectins, dextrins and cyclodextrins, those glucides further filed into oligosaccharides or polysaccharides, according to their effective degree of polymerization, chitin, glucan, glycosaminoglucans, agar, pectin, xanthene gum, guar gum, carob, glucomannane, sorbitol or glucitol, erythritol, xylitol, lactitol, maltitol, glucosamine or oxided forms such as uronic acids (specifically galacturonic acid, glucuronic acid), gluconic acid, as well as the salts of these acids, originating from syrups and/or molasses derived from sugar cane, beets and chicory or in solid form, such as powder, in the form of a paste or as an aqueous or non-aqueous solution. They can be crystalline, semi-crystalline or amorphous.

While those documents offer promising solutions for improving the stability of milk of lime, the stability is still limited over time, thereby creating many difficulties when the milk of lime is manufactured at the lime producer facilities and then shipped to- and stored at- the user's facilities. Moreover, even if of high solids content, the lime milk usually contains more than 50 weight % of water to be transported. The present invention aims to solve at least a part of these drawbacks by providing a ready-to-use powder formulation for making a high solids highly reactive milk of lime having an improved stability and settling allowing shipping the lime in a dry state and preparing the milk of lime at the user's facilities by simply adding the specialized dry hydrated lime to water to form a slurry with these unique properties.

To solve this problem, it is provided according to the present invention a ready-to-use powder formulation for making a high solids highly reactive milk of lime having an improved stability and settling comprising particles of high calcium lime, an organic stabilizing agent in C₄ to C₁₈ bearing one or more hydroxyl group(s) at an amount from 0.3 to 5 wt% and a dispersant polymer at an amount of 0.03 to 1.0 wt% based on the total weight of the ready-to-use powder formulation, said ready-to-use powder formulation containing at least 90 wt% of high calcium lime based on the total weight of the ready-to-use powder formulation, said ready-to-use powder formulation having a d₉₇ ≤ 40 µm and a d₅₀ comprised between 2 and 15 µm.

The wording "particles of high calcium lime" within the meaning of the present invention means particles containing at least 88 wt% of hydrated lime, preferably at least 90 wt%, more preferably at least 92 wt% and even more preferably at least 93 wt% hydrated lime relative to the weight of the solid matter, such as the particles. The content of hydrated lime in the solid matter can be determined by the amount of available lime according to the standard EN 459-2, §5.8.

It has been indeed highlighted according to the present invention that it is possible to provide a dry formulation which can be manufactured off-site and simply added to water on site.

According to the present invention, the organic stabilizing agent and the dispersant polymer are already contained in the ready-to-use formulation without impairing the properties of the final milk of lime. According to the present invention, it was surprisingly possible, against all expectations to have the dispersant polymer easily & swiftly recovering from its collapsed state by addition of water. Further, the dispersant polymer become active again, while the presence of calcium ions would have thought away the man skilled in the art from adding it ta a calcium based compound as it is generally considered that calcium ions are detrimental to the unfolding of the collapsed polymer and to the regaining of the dispersant functionality. Indeed, dispersant polymers, like polycarboxylate polymers change their so-called conformation (the "outer shape" of the polymer chain) both with concentration and calcium content. Both will force the polymer into a more compact form, which will reduce its efficiency as a dispersant. A good dispersant should have stretched chains to create distance between the solid particle by so-called steric repulsion. A contracted or collapsed conformation occurring by complete removal of the solvent (i.e. the water), will act less or even not at all as a dispersant.

Further, organic stabilizing agent in C₄ to C₁₈ bearing one or more hydroxyl group(s) like sugars contain typically either aldehyde (e.g. glucose and its di-, tri- and oligosaccharides) or ketone groups (e.g. fructose and its di-, tri or oligosaccharides). Such groups are well known to be highly susceptible to the so-called aldol reaction or aldol addition under alkaline conditions, which can convert the aldehyde into an alcohol or an acid in the case of polyalcohol - or lead to shortening of the carbon-chain in the polyol. This is especially likely in keto-sugars like fructose. This is explained in some detail in "Sugar Activation by Alkali" by P.A. Shaffer & T.E. Friedemann in Journal of Biological Chemistry (https://www.jbc.org/content/86/1/345.full.pdf) or "Concentrated Lactic Acid Production from Invert Sugar in Alkaline Solution" by Rinlada Sirisangsawang & Prakob Kitchaiya in Chem. Eng. Trans, No. 75, 2019 (https://www.aidic.it/cet/19/75/103.pdf).

Due to this decomposition, it is even more surprising according to the present invention that the organic stabilizing agent in C₄ to C₁₈ bearing one or more hydroxyl group(s) which would possibly decompose to different products, keep their initial similar effect in stabilizing lime slurry viscosity over time.

In addition, the dispersant polymer in combination with an organic stabilizing agent made it possible to provide a ready-to-use powder formulation stable on storage under a dry state and which can form after being slurried a highly reactive, high solids milk of lime having an improved viscosity and settling stability.

When the milk of lime is prepared on site with a standard slurrying equipment, e.g. a stirred tank, it shows a stable and improved viscosity in such a way that it does not exceed 1000 mPa·s, preferably it does not exceed 500 mPa·s, more preferably 400 mPa·s after 14 days of dispersion in water, either in resting state or in sheared state.

By the term viscosity, it is meant in the present application, dynamic or absolute viscosity measured in the centipoise (cP) unit or in the millipascal-second (mPa·s) unit. One centipoise is equal to one millipascal-second (mPa·s) in the International system of units. The viscosity according to the present invention is measured according to standard industry practice, as by the use of a "Brookfield DV III Rheometer" viscometer, with the suitable spindle according to the observed torque or viscosity, typically LV spindle N° 3, at 100 rpm. The measurement was taken on the 30th second, once the viscometer motor was turned on.

According to the present invention, the viscosity measurements have been made under different states, i.e. under a "resting state" or "at rest" and under a "sheared state", or "under agitation".

Within the meaning of the present invention, it is meant by the terms "resting state" or "at rest", a state which is considered typically achieved after 2 to 4hrs at rest, i.e. without agitation, movement or flow. In this state, it is assumed, that the lime particles have arranged themselves in a network, which increases the viscosity and the yield strength, i.e. the force required to make the product flow.

By the term "sheared state" or "under agitation", it is meant the opposite state where the aforementioned network-state has been destroyed, so that the resistance to flow is reduced. While viscosity is still decreasing with increasing movement, the sheared state has lower viscosity and lower yield strength. The agitation can be continuous or applied for a part of the day, each day, like during one hour per day.

According to the present invention, the stable and improved viscosity was observed even for the very high solid contents (such as between 40 wt% to 60 wt%) while keeping a very fine particle size distribution, thereby allowing the preparation of a milk of lime having also a high reactivity which can be advantageous for applications such as pH adjustment in general, remineralization, neutralization, precipitation, coating, lubrification or flocculation.

In a preferred embodiment, said organic stabilizing agent in C₄ to C₁₈ bearing one or more hydroxyl group(s) is present at an amount from 0.4 to 2.0wt%, most preferably 0.5 to 1.2wt% based on the total weight of the ready-to-use powder formulation. The given wt% are defined by the wt% of active matter, i.e. the content of organic stabilizing agent and not the amount of solution or syrup when the organic stabilizing agent is not commercialized under solid form. The amount of organic stabilizing agent can be determined by conventional analytic method, such as by extraction of the organic stabilizing agent with a solvent from the particles of high calcium lime and characterizing the amount of organic stabilizing agent by HPLC & GC-MS.

In another preferred embodiment, said dispersant polymer is present at an amount of 0.04 to 0.5wt%, most preferably 0.05 to 0.2wt%, based on the total weight of the ready-to-use powder formulation. The given wt% are defined by the wt% of active matter, i.e. the content of dispersant polymer and not the amount of solution of dispersant polymer under which form it is commercialized. The amount of dispersant polymer can be determined by conventional analytic method, such as by extraction of the dispersant polymer with a solvent from the particles of high calcium lime and characterizing the amount of dispersant polymer by HPLC & GC-MS & gel-permeation chromatography & FTIR.

Preferably, the dispersant polymer is a hydrophilic polymer dispersant ideally soluble in water, i.e. a dispersant polymer characterized by a high content in hydrophilic groups, such as ether, ester, hydroxyl and carboxylate groups.

Advantageously, said ready-to-use powder formulation has a d₉₇ lower than or equal to 30 µm, preferably lower than or equal to 20 µm, most preferably lower than or equal to 15 µm.

In addition, said ready-to-use powder formulation has a d₉₇ greater than or equal to 10 µm, preferably greater than or equal to 12 µm.

In a further advantageous embodiment of the ready-to-use formulation, the particles have a d₅₀ lower than 12 µm, more preferably lower than 10 µm, particularly lower than or equal to 8 µm, more particularly lower than or equal to 6 µm.

The notation dₓ represents a diameter expressed in µm, measured by laser granulometry in methanol after sonication, compared to which the size of x% by volume of the particles measured are less than or equal to this diameter.

In a preferred embodiment, the ready-to-use powder formulation is packaged in an industrial container, such as in 25 to 50 kg bags or about 1 m³ big bags, in 10 m³, 20 m³ or larger silo, transportable containers and the like.

In a preferred embodiment, the ready-to-use powder formulation for making a high solids highly reactive milk of lime having an improved stability and settling has a silica content expressed in SiO₂ equivalent lower than 1.5 wt%, preferably lower than or equal to 1.1 wt%, particularly lower than or equal to 0.85 wt%, more preferably lower than or equal to 0.65 wt%, even more particularly lower than or equal to 0.5 wt% based on the total weight of the ready-to-use powder formulation.

In another preferred embodiment, the ready-to-use powder formulation according to the present invention has an aluminum content expressed in Al2O₃ equivalent lower than 0.40 wt%, preferably lower than or equal to 0.35 wt%, more preferably lower than or equal to 0.30 wt%, even more particularly lower than or equal to 0.25 wt% based on the total weight of the ready-to-use powder.

In yet another preferred embodiment, the ready-to-use powder formulation according to the present invention has an sulfur content expressed in SO₃ equivalent lower than 0.5 wt%, preferably lower than or equal to 0.4 wt%, more preferably lower than or equal to 0.30 wt%, even more particularly lower than or equal to 0.25 wt% based on the total weight of the ready-to-use powder.

According to the present invention, the particles of the ready-to-use powder formulation have a specific surface area measured by manometric nitrogen adsorption and calculated using the Brunauer, Emmett and Teller model (BET method) after degassing 2 h at 190°C comprised between 5 and 45 m²/g, more preferably between 7 and 30 m²/g, more particularly between 8 and 25 m²/g.

According to the present invention, the particles of the ready-to-use powder formulation have a total BJH pore volume, constituted of pores, the diameter of which are less than 1000 Å greater than or equal to 0.03 cm³/g, preferably greater than or equal to 0.05 cm³/g and generally lower or equal to 0.15 cm³/g, preferably lower than 0.12 cm³/g, obtained by the desorption of nitrogen.

According to the present invention, the particles of the ready-to-use powder formulation have a total BJH pore volume made up of pores having a diameter between 100 and 300 Å, obtained by nitrogen desorption, greater than or equal to 0.01 cm³/g, preferably greater than or equal to 0.02, preferably greater than or equal to 0.03 cm³/g.

By the expression "BJH pore volume", it is meant according to the present invention, the pore volume measured by manometry with nitrogen adsorption at 77 K after degassing under vacuum at a temperature lying between 150 and 250° C, notably at 190° C. for at least 2 hours and calculated according to the BJH method using the desorption graph, with the hypothesis of a cylindrical pore geometry.

By the term "total pore volume", according to the present invention, it is meant the BJH pore volume made up of pores having a diameter less than or equal to 1000 Å (17 to 1000 Angstroms).

In another preferred embodiment according to the present invention, the particles of the ready-to-use powder formulation presents a monomodal size distribution.

By the terms monomodal, it is meant that the particule size distribution curve does not present more than one peak.

In a particular embodiment of the present invention, the ready-to-use powder formulation present having a flowability comprised in the range of 1.2 to 2.0, preferably between 1.3 and 1.8 as measured according to ASTM D6128 standard.

The advantageous flowability of the ready-to-use powder formulation according to the present invention is kept at a very good level despite the addition of organic stabilizing agent and/or dispersant polymer through an aqueous solution of them. Indeed, typically, even small amounts of water (1 to 2wt%) can impair the flow behavior of powdery hydrated lime, especially for ultrafine hydrated lime used according to the present invention. The flowability of the ready-to-use powder formulation is an important aspect to contribute to the "ready-to-use" aspect of the formulation according to the present invention.

The behaviour of powder in a storage silo may be simulated with another method using a rheometer for powder, such as the Brookfield powder flow tester (PFT) according to the ASTM D6128 norm. In this method, a powder sample is introduced into the equipment and is subjected to compaction increasing overtime. At each compression stage (principal consolidation stress), a specific torque is applied to the powder until failure (non-confined failure restriction). The response of the powder to the restriction applied is recorded on a computer, which evaluates the static cohesion of the tested sample. The results are shown by a graph which is compared to the ASTM references.

In another particular embodiment according to the present invention, the ready-to-use powder formulation presents a moisture content comprised between 0.2 and 3 wt%, preferably between 0.3 and 2 wt%, most preferably between 0.5 and 1.5 wt%, based on the total weight of the powder formulation as measured by infra-red thermobalance at 150°C. Alternatively, similar result can be obtained by thermogravimetric analysis at the same temperature.

According to the present invention, the moisture content is measured by a loss of ignition test at 150° C.

Preferably, the organic stabilizing agent in C4 to C₁₈ bearing one or more hydroxyl groups is chosen amongst an uronic or aldonic acid of a carbohydrate, e.g., sodium gluconate, or a polyol, or a carbohydrate chosen amongst a monosaccharide, a disaccharide, an oligosaccharide or a polysaccharide or combination thereof.

More preferably, said dispersant polymer is a water-soluble polymer preferably having an active polycarboxylate ether concentration of at least 10 wt%, more preferably of at least 15 wt% and even more preferably of at least 20 wt%.

Other embodiments of the ready-to-use powder formulation for making a milk of lime having an improved stability according to the present invention are mentioned in the appended claims.

The present invention also relates to a process for manufacturing a ready-to-use powder formulation for making a high solids highly reactive milk of lime having an improved stability and settling.

The process according to the present invention comprises the steps of:
- providing a predetermined amount of high calcium lime having a particle size distribution with a d₉₇ ≤ 40 µm and a d₅₀ comprised between 2 and 15 µm in an agitated unit.
- A first addition of an organic stabilizing agent in C4 to C₁₈ bearing one or more hydroxyl group(s) at an amount from 0.3 to 5 wt% relative to the total weight of the ready-to-use powder formulation, and
- A second addition of a dispersant polymer at an amount of 0.03 to 1.0 wt% active polymer, i.e. based on non-volatile content relative to the total weight of the ready-to-use powder formulation, and
- Collecting a ready -to-use powder formulation for making a high solids highly reactive milk of lime having an improved stability and settling.

It has been surprisingly realized according to the present invention that the dispersant polymer retains its dispersing function after having been added and stored on a dry hydrated lime powder, as the dispersant function requires, that the dispersant polymer is in its unfolded/ stretched conformation. This conformation is only normally attained in solution, due to the effect of the water molecules, which bond to the polymer's functional groups and prevent the polymer from contracting.

During drying, i.e. either intentionally in a drying step or by evaporation due to contact with ambient or process air, e.g. in a classification or pneumatic conveying equipment, on the lime, the dispersant polymer should contract to into a bunched shape, as ina dried state the functional groups attract each other. It was in fact surprising to note that from such dried state in a hydrate formulation according to our invention, the dispersant polymer easily recovers its functionality when slurried with water to form the milk of lime. This would indicate that the dispersant polymer actually readily unfolds again. This is indeed unexpected as the bond between functional groups is quite strong and the water should be hindered from entering the hardened polymer (like dissolving dried-in bread-dough).

Preferably, the process according to the present invention comprises a packaging step of the ready-to-use powder formulation for making a milk of lime having an improved stability in an industrial container, such as in 25 to 50 kg bags or about 1 m³ big bags, in 10 m³, 20 m³ or larger silo, transportable containers and the like.

In a preferred embodiment of the process for manufacturing a ready-to-use powder formulation for making a high solids highly reactive milk of lime having an improved stability and settling according the present invention, said high calcium lime is a hydrated lime, said process further comprising a step of agitating said predetermined amount of high calcium lime by activating said agitated unit for obtaining a moving high calcium lime, at least one amongst the first and second addition being performed to said moving high calcium lime.

In another preferred embodiment, the process for manufacturing a ready-to-use powder formulation for making a high solids highly reactive milk of lime having an improved stability and settling according to the present invention, comprising a preliminary slaking step of quicklime to obtain a high calcium lime saving said particle size distribution.

In one variant of the preferred embodiment, the first addition is performed before said slaking step, i.e. to the slaking water or to the quicklime. For example, it is contemplated that the organic stabilizing agent is in solid state and is mixed to the quicklime before the slaking step. It is also for example foreseen that the organic stabilizing agent is in solid or liquid state and added to the water for slaking the quicklime.

Quicklime can be also slaked in a hydrator having different zones, said solid particles being transported from the feeding zone (quicklime entry) to the collecting zone (slaked lime exit) for example by a screw. The water being possibly added at one location or at several locations between the feeding zone and the collecting zone. It is foreseen according to the present invention that the first addition is performed during said slaking step, i.e. to the slaking water or to the quicklime at least partially hydrated depending on the location between the quicklime entry and hydrated lime exit, at once or progressively along the traveling of the solid lime between the quicklime entry and the hydrated lime exit.

According to the present invention, the first addition is performed after said slaking step, i.e. to the slaked lime, optionally before or after a further drying step.

In another variant of the preferred embodiment, the second addition is performed before said slaking step, i.e. to the slaking water or to the quicklime. For example, it is contemplated that the dispersant polymeris in solid state and is mixed to the quicklime before the slaking step. It is also for example foreseen that the dispersant polymer is in solid or liquid state and added to the water for slaking the quicklime.

In yet another variant, It is foreseen according to the present invention that the second addition is performed during said slaking step, i.e. to the slaking water or to the quicklime at least partially hydrated depending on the location between the quicklime entry and hydrated lime exit, at once or progressively along the traveling of the solid lime between the quicklime entry and the hydrated lime exit.

In still another variant, the second addition is performed after said slaking step, i.e. to the slaked lime, optionally before or after a further drying step.

The first addition and the second addition can be performed together or separately. One amongst the first and second addition can be performed before the slaking step and the other amongst the first and second additions can be performed during or after the slaking step.

According to the present invention, the dispersant polymer is added under a solid form or under a form of a suspension or solution.

Preferably, when the dispersant polymer is added as a dry powder, it has a maximum particle size lower than or equal to 500 µm, preferably lower than or equal to 200 µm. When the dispersant polymer is added as a solution, the solution presents a dispersant polymer content lower than or equal to 10wt%, preferably lower than or equal to 20wt%.

In addition, the organic stabilizing agent can be added under a solid form or under a form of a suspension or solution.

Preferably, when the organic stabilizing agent is added as a dry powder, it has a maximum particle size lower than or equal to 500 µm, preferably lower than or equal to 200 µm. When the organic stabilizing agent is added as a solution, the solution presents an organic stabilizing agent content greater than or equal to 15wt%, preferably greater than or equal to 30wt%.

It is foreseen according to the present invention that the dispersant polymer can be added under a suspension or a solution and the organic stabilizing agent can be added under a solid form or a suspension or solution form. Also, It is foreseen according to the present invention that the dispersant polymer can be added under a solid form and the organic stabilizing agent can be added under a solid form or a suspension or solution form.

In a variant according to the present invention, said dispersant polymer is added under the form of dispersant polymer solution, and optionally said organic stabilizing agent as solution, by spraying or atomizing said suspension or solution of said dispersant polymer, optionally with said organic stabilizing agent, on said moving high calcium lime.

In another variant according to the present invention, said organic stabilizing agent is added under the form of suspension or a solution, being obtained by suspending said organic stabilizing agent in a liquid phase containing water and optionally said dispersant polymer, by spraying or atomizing said suspension or solution of said organic stabilizing agent, optionally with said dispersant polymer, on said moving high calcium lime.

In another preferred embodiment, said dispersant polymer is added at an amount of 0.04 to 0.5wt%, most preferably 0.05 to 0.2wt%, based on the total weight of the ready-to-use powder formulation.

Preferably, the dispersant polymer is a hydrophilic polymer dispersant ideally soluble in water, i.e. a dispersant polymer characterized by a high content in hydrophilic groups, such as ether, ester, hydroxyl and carboxylate groups.

In yet another variant according to the present invention, said step of adding an organic stabilizing agent in C4 to C₁₈ bearing one or more hydroxyl group(s) to the moving high calcium lime and said step of adding said dispersant polymer are performed together, optionally by first preparing a pre-mix of organic stabilizing agent and dispersant polymer, under a solid form or under the form of a suspension or a solution, in which later case the suspension or solution is sprayed or atomized on said moving high calcium lime.

In a preferred embodiment, said organic stabilizing agent in C' to C₁₈ bearing one or more hydroxyl group(s) is added at an amount from 0.4 to 2.0wt%, most preferably 0.5 to 1.2wt% based on the total weight of the ready-to-use powder formulation.

Advantageously, said ready-to-use powder formulation has a d₉₇ lower than or equal to 30 µm, preferably lower than or equal to 20 µm, most preferably lower than or equal to 15µm.

In addition, said ready-to-use powder formulation has a d₉₇ greater than or equal to 10 µm, preferably greater than or equal to 12 µm.

In a further advantageous embodiment of the ready-to-use formulation, the particles have a d₅₀ lower than 12 µm, more preferably lower than 10 µm, particularly lower than or equal to 8 µm, more particularly lower than or equal to 6 µm.

Other embodiments of the process according to the present invention are mentioned in the appended claims.

Other characteristics and advantages of the present invention will be derived from the non-limitative following description, and by making reference to the drawings and the examples.

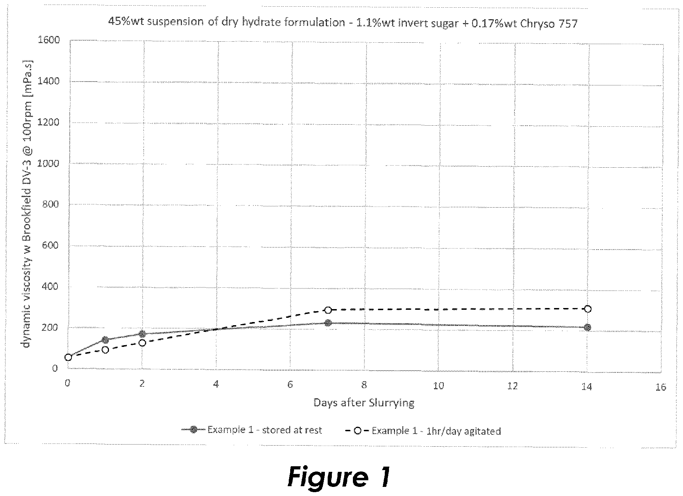

In the drawings, figure 1 represents the viscosity measurement under agitation for one hour per day of the milk of lime obtained in Example 1.
Figure 2 represents the viscosity measurement at rest of the milk of lime obtained in Example 2.
Figure 3 represents the viscosity measurement under agitation for one hour per day of the milk of lime obtained in Example 2.
Figure 4 represents the viscosity measurement at rest of the milk of lime obtained in Example 3.
Figure 5 represents the viscosity measurement under agitation for one hour per day of the milk of lime obtained in Example 3.
Figure 6 represents the viscosity measurement at rest of the milk of lime obtained in Example 4.
Figure 7 represents the viscosity measurement under agitation for one hour per day of the milk of lime obtained in Example 4.
Figure 8 represents the viscosity measurement at rest and under agitation for one hour per day of the milk of lime obtained in Example 5.
Figure 9 represents the viscosity measurement at rest of the milk of lime obtained in Example 6.
Figure 10 represents the viscosity measurement under agitation for one hour per day of the milk of lime obtained in Example 6.
Figure 11 represents the viscosity measurement at rest and under agitation for one hour per day of the milk of lime obtained in Example 7.
Figure 12 represents the viscosity measurement at rest and under agitation for one hour per day of the milk of lime obtained in Comparative Example 2.
Figure 13 represents the viscosity measurement at rest and under agitation for one hour per day of the milk of lime obtained in Comparative Example 1

In the drawings, the same reference numbers have been allocated to the same or analog element

### Examples.-

### Example 1.-

1.5kg ultrafine, i.e. having a maximum particle size lower than 20 µm, high calcium lime (dry hydrate) with a BET specific surface area of ca. 8.5 m²/g from the Southern United States is placed in the bowl of a Hobart N50 planetary mixer, equipped with a Beater blade and a wall scraper. The hydrate is mixed at speed setting 1 (136 rpm).

The high calcium lime (dry hydrated lime) used in Example 1 present a d₉₇ of 13.3 µm and a d₅₀ of 3.1 µm. The silica content expressed as SiO₂ equivalent was lower than 1.5 wt%, the aluminum content expressed as Al2O₃ equivalent was lower than 0.5 wt% and the sulfur content expressed as SO₃ equivalent was lower than 0.5 wt% as well. The available Ca(OH)₂ content of the high calcium lime was above 91 wt%.

A commercially available 72wt% solid content invert-sugar-syrup from Germany with a degree of inversion of 66% is diluted with the same amount in weight of demineralized water. The syrup contained about 33 wt% sucrose, about 33wt% fructose, and some glucose in its dry solid content with respect to the total weight of the syrup.

45.8 g of this diluted syrup is added by spraying from a household spray bottle during ca. 5min onto the agitated lime hydrate powder to achieve a dosage of 1.1 wt% carbohydrate mixture per wt dry hydrate. The resultant first mixture is agitated for another 10 min after addition to allow homogenization.

Then 25.5 g of a 10wt% solid content aqueous polymer dispersant solution is added by spraying during 5 min with the same type of spray bottle onto the agitated resultant first mixture, to achieve a dosage of 0.17wt% non-volatile polymer per weight dry calcium hydrate. The polymer dispersant is a comb-copolymer polyether-polycarboxylate, commercially available from Chryso SAS as Neomere®tech 757 (shortened in the text and drawings under Chryso 757). The resultant final mixture of Example 1 is agitated for another 10 min after addition to allow homogenization to form a ready-to-use powder formulation of high calcium hydrated lime.

The ready-to-use powder formulation of high calcium hydrated lime of example 1 was tested for flowability. The flowability of the ready-to use formulation was 1.6. The flow function determined with the PFT of 1.6 is an average value obtained on 5 measurement points at different consolidating stresses. Those consolidating stresses are applied in the range 1 to 10 kPa.

The ready-to-use powder formulation of high calcium hydrated lime is stored in a bucket with a tight-fitting lid till it is used.

To produce a slurry having a solid content (high solids) of 45%, 1650 g of water is placed in a beaker of 5 dm³ and agitated with a propeller stirrer of 70 mm diameter at 700 rpm. Then 1350 g ready-to-use powder formulation of high calcium hydrated lime are added in small portions over the course of 10 to 15 min. The agitation is continued for at least another 30 min, to ensure all lumps have broken up and a visually homogeneous suspension has been obtained.
The slurry is divided in 3 parts:
i. A 200 cm³ sample stored at rest for viscosity measurement over 2 weeks. The sample is shaken to homogeneity before measurement with a Brookfield DV3 Rheometer @ 100 rpm using the suitable spindle.
ii. A 1 dm³ sample, which is agitated for 1h/day by revolution in a 'paint mixer', for viscosity measurement with the Brookfield DV-3 Rheometer over 2 weeks.
iii. A 1 dm³ sample, which is stored at rest & used to evaluate settling, i.e. the height of the clear supernatant on top of the milk-of-lime is measured and expressed as ratio to the total height of the sample in the bottle.

The viscosity measurement of sample ii of the milk of lime obtained from the ready-to-use powder formulation of high calcium hydrated lime of example 1 hereabove have been plotted on Figure 1.

### Comparative Example 1 (counter example).-

To produce a slurry having a solid content (high solids) of 45%, 1760 g of water is placed in a beaker of 5 dm³ and agitated with a propeller stirrer of 70mm diameter at 700 rpm. Then 28.8g of the same invert sugar syrup (66% degree of inversion, ca. 72wt% dry content) as of Example 1 and 13.7g of Neomere®tech 757 are added to the water and dissolved. Subsequently, 1440g of the same dry high calcium hydrated lime of Example 1 are added in small portions over the course of 10 to 15 min. The agitation is continued for at least another 30 min, to ensure all lumps have broken up and a visually homogeneous suspension has been obtained.

The additive dosage corresponds to 1.2wt% active invert sugar and 0.19wt% active (dry) polymer per wt dry hydrate.
The slurry is divided in 3 parts:
i. A 200 cm³ sample stored at rest for viscosity measurement over 2 weeks. The sample is shaken to homogeneity before measurement with a Brookfield DV3 Rheometer @ 100rpm using the suitable spindle.
ii. A 1 dm³ sample, which is agitated for 1h/day by revolution in a 'paint mixer', for viscosity measurement with the Brookfield DV-3 Rheometer over 2 weeks.
iii. A 1 dm³ sample, which is stored at rest & used to evaluate settling, i.e. the height of the clear supernatant on top of the milk-of-lime is measured and expressed as ratio to the total height of the sample in the bottle.

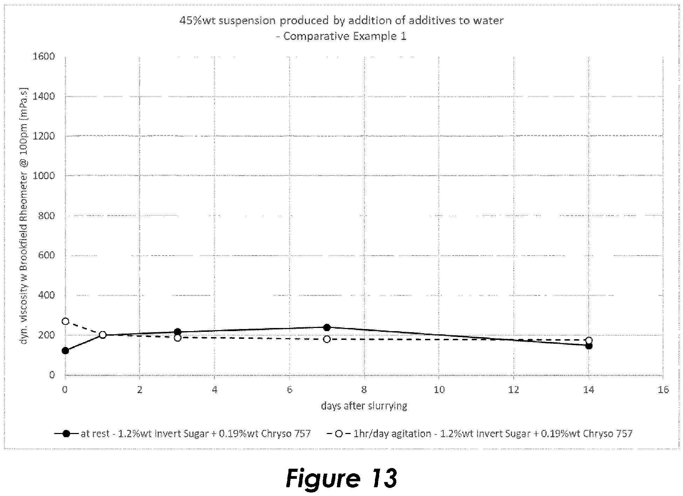

The viscosity measurement of sample ii hereabove have been plotted on Figure 13.

The results of Comparative Example 1 and Example 1 plotted respectively in Figure 13 and Figure 1 clearly indicate, that results obtained by addition of these additives to the water, i.e. wet processing, are comparable.

The required dosage for wet addition is similar to the one for dry addition and provides similar stability in viscosity of the suspension over time. This is contrary to expectations, as an improved distribution of additives would be expected by a person knowledgeable in the art.

### Example 2.-

The protocol of example 1 has been reproduced with a high calcium lime (dry hydrated lime) with a BET specific surface area of ca. 21.3 m²/g from Germany.

The high calcium lime (dry hydrated lime) used in Example 2 present a d₉₇ of 16.4µm and a d₅₀ of 4.4µm. The silica content expressed as SiO₂ equivalent was lower than 0.5 wt%, the aluminum content expressed as Al2O₃ equivalent was lower than 0.2 wt% and the sulfur content expressed as SO₃ equivalent was lower than 0.1 wt%. The available Ca(OH)₂ content of the high calcium lime was above 93 wt%.

Different organic stabilizing agents have been used to reach a dosage of 1.1 wt% carbohydrate mixture per weight dry hydrate and have been diluted in water and sprayed onto the high calcium hydrated lime. The dispersant polymer was also sprayed onto the high calcium hydrated lime at a dosage of 0.85 wt%, corresponding to 0,17wt% active (dry matter = DM) polymer per wt hydrate, according to table 1.

**Table 1.-**

| **Organic stabilizing agent** | **Dosage** | **Dispersant polymer** | **Dosage DM content*** |
|---|---|---|---|
| High Fructose Corn syrup | 1.1 wt% | Neomere® Tech 646 from Chryso | 0.17 wt% |
| Invert-sugar-syrup | 1.1 wt% | Neomere® Tech 646 from Chryso | 0.17 wt% |
| Sucrose | 1.1 wt% | Neomere® Tech 646 from Chryso | 0.17 wt% |
| Sodium gluconate | 1.1 wt% | Neomere® Tech 646 from Chryso | 0.17 wt% |

| | | | |
|---|---|---|---|
| *per weight dry lime hydrate | | | |

As for example 1, the slurry is divided in 3 parts which have been treated the same way as indicated under item i, ii and iii.

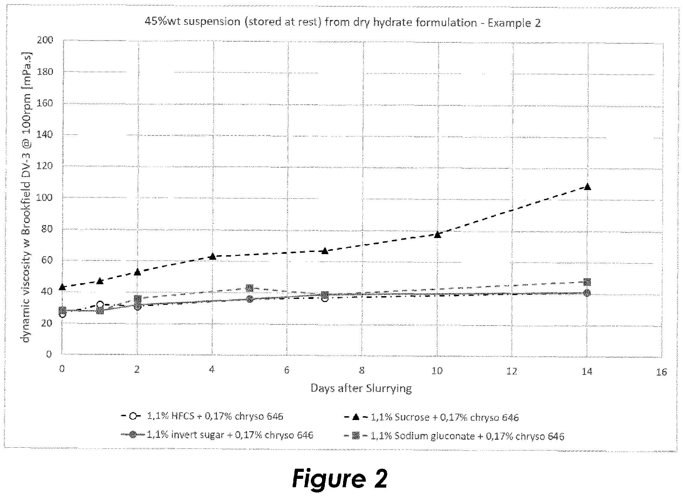

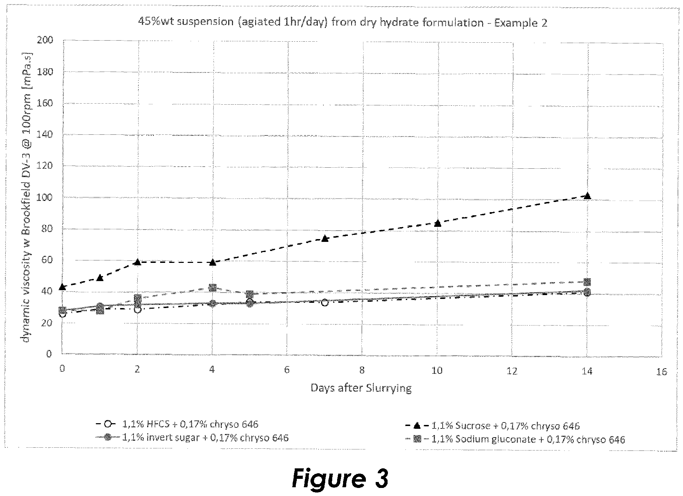

The result of the viscosity measurement at rest (sample i) have been plotted on Figure 2 and the result of the viscosity for a milk of lime agitated 1 hour per day (sample ii) have been plotted on Figure 3.

As it can be seen for the 4 tested organic stabilizing agents, the viscosity was kept below 200 mPa.s for 14 days for both viscosity measurements plotted on Figure 2 and 3.

### Example 3.-

The protocol of example 1 has been reproduced with a high calcium lime (dry hydrated lime) with a BET specific surface area of ca. 14.5 m²/g from Belgium.

The high calcium lime (dry hydrated lime) used in Example 3 present a d₉₇ of 10.9 µm and a d₅₀ of 3.6 µm. The silica content expressed as SiO₂ equivalent was lower than 0.5 wt%, the aluminum content expressed as Al₂O₃ equivalent was lower than 0.3 wt% and the sulfur content expressed as SO₃ equivalent was lower than 0.2 wt%. The available Ca(OH)₂ content of the high calcium lime was above 91 wt%.

Different organic stabilizing agents have been used to reach a dosage of 1.1 wt% carbohydrate mixture per weight dry hydrate and have been diluted in water and sprayed onto the high calcium hydrated lime. The dispersant polymer was also sprayed onto the high calcium hydrated lime at a dosage of 0.85 wt%, corresponding to 0,17wt% active (dry) polymer per wt hydrate, according to table 2.

**Table 2.-**

| **Organic stabilizing agent** | **Dosage** | **Dispersant polymer** | **Dosage dry matter content** |
|---|---|---|---|
| High Fructose Corn syrup | 1.1 wt% | Neomere® Tech 646 from Chryso (Chryso 646) | 0.17 wt% |
| Invert-sugar-syrup | 1.1 wt% | Neomere® Tech 646 from Chryso | 0.17 wt% |

| | | | |
|---|---|---|---|
| *per weight dry lime hydrate | | | |

As for example 1, the slurry is divided in 3 parts which have been treated the same way as indicated under item i, ii and iii.

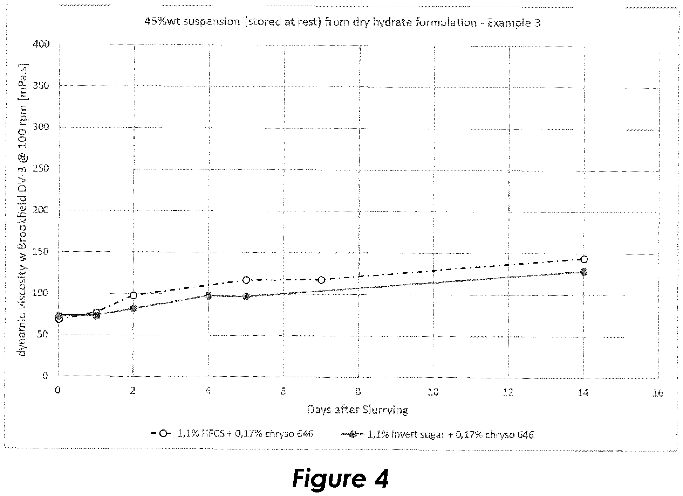

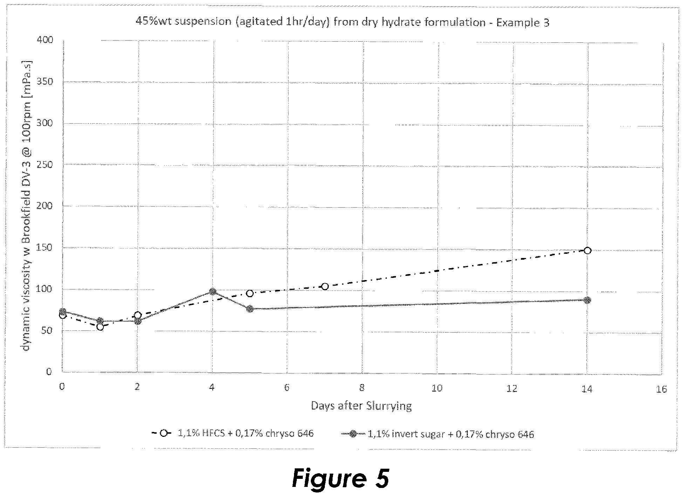

The result of the viscosity measurement at rest (sample i) have been plotted on Figure 4 and the result of the viscosity for a milk of lime agitated 1 hour per day (sample ii) have been plotted on Figure 5.

As it can be seen for the 2 tested organic stabilizing agents, the viscosity was kept below 200 mPa.s for 14 days for both viscosity measurements plotted on Figure 4 and 5.

### Example 4.-

The protocol of example 1 has been reproduced with a high calcium lime (dry hydrated lime) with a BET specific surface area of ca. 21.3 m²/g from Germany..

The high calcium lime (dry hydrated lime) used in Example 1 present a d₉₇ of d₉₇ of 16.4µm and a d₅₀ of 4.4µm. The silica content expressed as SiO2 equivalent was lower than 0.5 wt%, the aluminum content expressed as Al₂O₃ equivalent was lower than 0.2 wt% and the sulfur content expressed as SO₃ equivalent was lower than 0.1 wt% as well. The available Ca(OH)₂ content of the high calcium lime was above 93 wt%.

Different organic stabilizing agents have been used at different dosage. The dispersant polymer was also sprayed onto the high calcium hydrated lime at different dosages according to table 3.

**Table 3.-**

| **Organic stabilizing agent** | **Dosage** | **Dispersant polymer** | **Dosage of dispersant solution (dry matter content)*** |
|---|---|---|---|
| Sucrose | 1.2 wt% | Rheosperse™ 3830 from Coatex | 0.75 wt% (0.30wt%) |
| Sucrose | 1.2 wt% | Rheosperse™ 3830 from Coatex | 0.25 wt% (0.10wt%) |
| Sucrose | 0.5 wt% | Rheosperse™ 3830 from Coatex | 0.75 wt% (0.30wt%) |
| Sucrose | 0.5 wt% | Rheosperse™ 3830 from Coatex | 0.25 wt% (0.10wt%) |
| Sucrose | 1.0 wt% | Rheosperse™ 3830 from Coatex | 0.30 wt% (0.12wt%) |
| Sucrose | 0.85 wt% | Rheosperse™ 3830 from Coatex | 0.50 wt% (0.20wt%) |
| Invert-sugar-syrup | 0.85 wt% | Rheosperse™ 3830 from Coatex | 0.50 wt% (0.20wt%) |

| | | | |
|---|---|---|---|
| *per weight dry lime hydrate | | | |

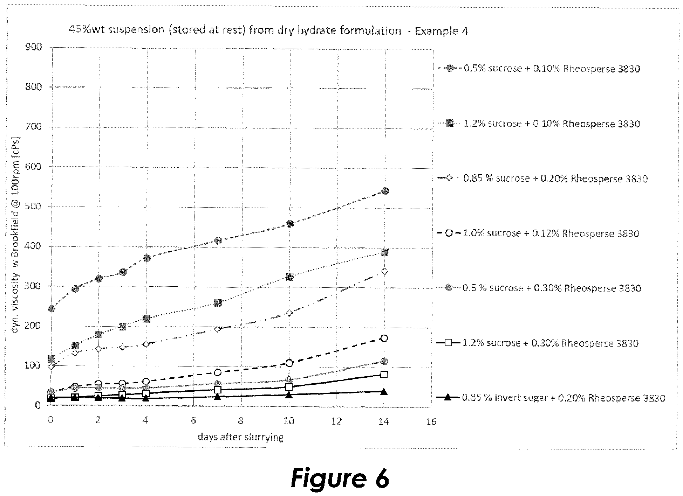

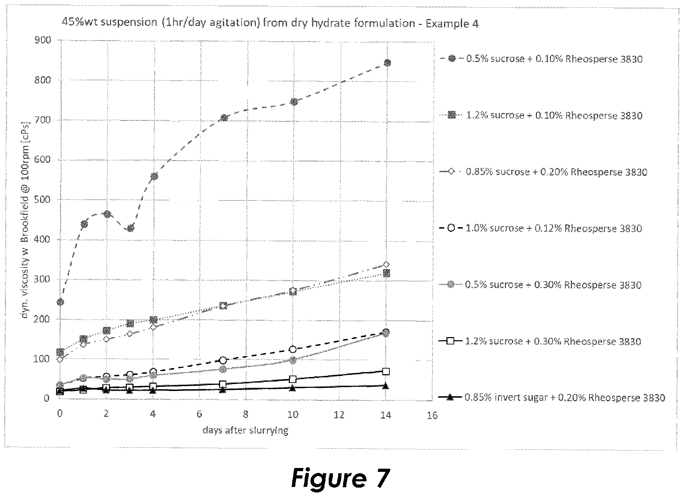

As for example 1, the slurry is divided in 3 parts which have been treated the same way as indicated under item i, ii and iii.
The result of the viscosity measurement at rest (sample i) have been plotted on Figure 6 and the result of the viscosity for a milk of lime agitated 1 hour per day (sample ii) have been plotted on Figure 7.

As it can be seen for the different dosage of tested organic stabilizing agents and dispersant polymer, the viscosity was kept below 600 mPa.s for 14 days for the viscosity measurements plotted on Figure 6 and below 900 mPas for the viscosity measurements plotted on Figure 7.

### Example 5.-

The protocol of example 1 has been reproduced with a high calcium lime (dry hydrated lime) BET specific surface area of ca. 8.5m²/g from the Southern United States.

The high calcium lime (dry hydrated lime) used in Example 1 present a d₉₇ of 13.3 µm and a d₅₀ of 3.1 µm. The silica content expressed as SiO₂ equivalent was lower than 1.5 wt%, the aluminum content expressed as Al₂O₃ equivalent was lower than 0.5 wt% and the sulfur content expressed as SO₃ equivalent was lower than 0.5 wt% as well. The available Ca(OH)₂ content of the high calcium lime was above 91 wt%.

A mixture of High Fructose Corn syrup (2/3 in respect to active, dry sugar content) and sucrose (1/3) has been used to reach a final dosage of 1.1 wt% carbohydrate mixture per weight dry hydrate and have been diluted in water and sprayed onto the high calcium hydrated lime. The dispersant polymer was also sprayed onto the high calcium hydrated lime at a dosage of 0.85 wt% corresponding to 0.17wt% active (dry) polymer per wt dry hydrate, according to table 4.

**Table 4.-**

| **Organic stabilizing agent** | **Dosage** | **Dispersant polymer** | **Dosage of dispersant solution (dry matter content)*** |
|---|---|---|---|
| High Fructose Corn syrup + Sucrose | 1.1 wt% | Neomere® Tech 757 from Chryso | 0.85 wt% (0.17 wt%) |

| | | | |
|---|---|---|---|
| *per weight dry lime hydrate | | | |

As for example 1, the slurry is divided in 3 parts which have been treated the same way as indicated under item i, ii and iii.

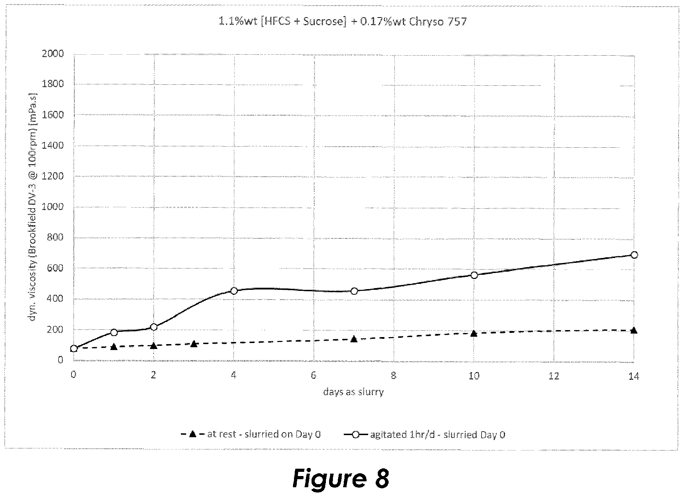

The result of the viscosity measurement at rest (sample i) and the result of the viscosity for a milk of lime agitated 1 hour per day (sample ii) have been plotted on Figure 8.

As it can be seen for the tested organic stabilizing agent, the viscosity was kept below 200 mPa.s for 14 days for the viscosity measurement at rest and below 800 mPa.s for the viscosity measurement under agitation 1 hour per day, both plotted on Figure 8.

### Example 6.-

The protocol of example 1 has been reproduced with a high calcium lime (dry hydrated lime) with a BET specific surface area of ca. 8.5m²/g from the Southern United States.

The high calcium lime (dry hydrated lime) used in Example 1 present a d₉₇ of 13.3 µm and a d₅₀ of 3.1 µm . The silica content expressed as SiO₂ equivalent was lower than 1.5 wt%, the aluminum content expressed as Al2O₃ equivalent was lower than 0.5 wt% and the sulfur content expressed as SO₃ equivalent was lower than 0.5 wt% as well. The available Ca(OH)₂ content of the high calcium lime was above 91 wt%.

As organic stabilizing agent, invert sugar syrup has been used to reach a dosage of 1.1 wt% carbohydrate per weight dry hydrate. The organic stabilizing agent and the dispersant polymer were pre-mixed before being sprayed together onto the high calcium hydrated lime. The dosage of the dispersant polymer was 0.85 wt%, corresponding to 0.17wt% active (dry) polymer per wt dry hydrate, according to table 5.

**Table 5.-**

| **Organic stabilizing agent** | **Dosage** | **Dispersant polymer** | **Dosage in DM content*** |
|---|---|---|---|
| Invert-sugar-syrup | 1.1 wt% | Neomere® Tech 757 from Chryso | 0.17 wt% |

| | | | |
|---|---|---|---|
| *per weight dry lime hydrate | | | |

The ready-to-use powder formulation according to the present example was stored for 1 week, for 2 weeks and for 1 month before being slurried according to the protocol of example 1

As for example 1, the slurry is divided in 3 parts which have been treated the same way as indicated under item i, ii and iii.

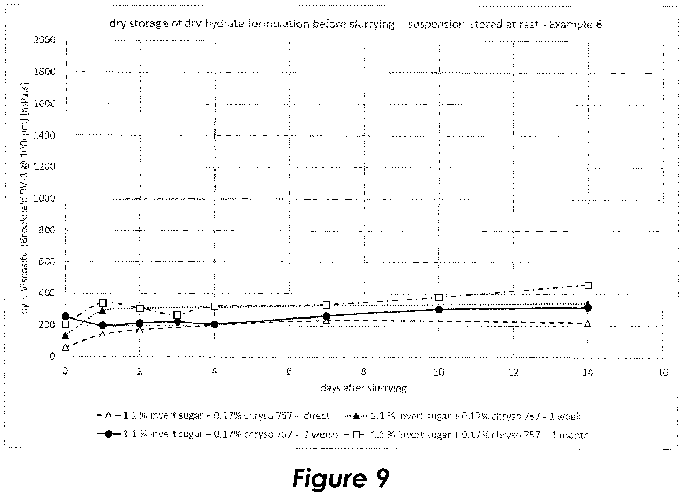

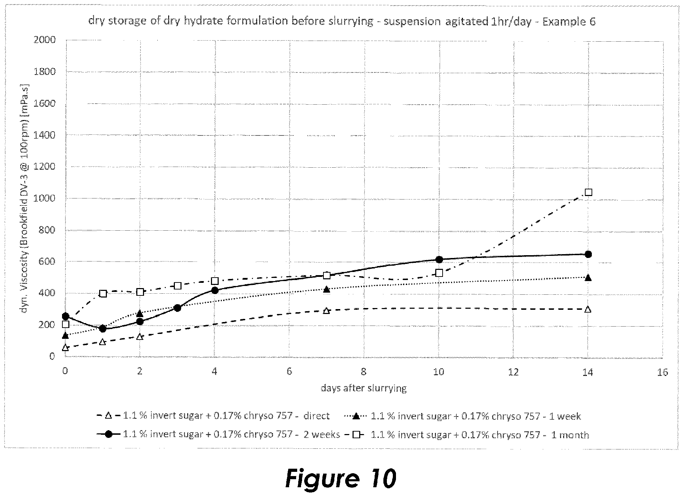

The result of the viscosity measurement at rest (sample i) have been plotted on Figure 9 and the result of the viscosity for a milk of lime agitated 1 hour per day (sample ii) have been plotted on Figure 10.

As it can be seen for the tested organic stabilizing agent, the viscosity was kept below 400 mPa.s for 14 days for the viscosity measurement at rest plotted on Figure 9 and for each storage period of the ready-to-use powder formulation of Example 6. The viscosity was kept acceptable for 14 days for the viscosity measurement with one hour agitation per day plotted on Figure 10 and for each storage period of the ready-to-use powder formulation of Example 6.

It should be understood that the present invention is not limited to the described embodiments and that variations can be applied without going outside of the scope of the appended claims

### Example 7

The protocol of Example 1 has been reproduced, except that a fine, dry sorbitol powder was used. The sorbitol was added dry to the same high calcium hydrated lime as of Example 1 and the powder mixture was agitated for 5 min to ensure homogeneity. The same polymer dispersant, method of addition and dosage as in Example 1 was used.

The resultant final mixture of Example 7 is agitated for another 10 min after addition to allow homogenization to form a dry formulation of high calcium hydrated lime.

The ready-to-use powder formulation of high calcium hydrated lime of example 7 was tested for flowability. The flowability of the ready-to use formulation was 1.5. The flow function determined with the PFT of 1.5 is an average value obtained on 5 measurement points at different consolidating stresses. Those consolidating stresses are applied in the range 1 to 10 kPa.

The dry formulation of high calcium hydrated lime is stored in a bucket with a tight-fitting lid till it is used.

To produce a slurry having a solid content (high solids) of 45%, 1650 g of water is placed in a beaker of 5 dm³ and agitated with a propeller stirrer of 70mm diameter at 700 rpm. Then 1350g of dry formulation of high calcium hydrated lime are added in small portions over the course of 10 to 15 min. The agitation is continued for at least another 30 min, to ensure all lumps have broken up and a visually homogeneous suspension has been obtained.
The slurry is divided in 3 parts:
i. A 200 cm³ sample stored at rest for viscosity measurement over 2 weeks. The sample is shaken to homogeneity before measurement with a Brookfield DV3 Rheometer @ 100rpm using the suitable spindle.
ii. A 1 dm³ sample, which is agitated for 1h/day by revolution in a 'paint mixer', for viscosity measurement with the Brookfield DV-3 Rheometer over 2 weeks.
iii. A 1 dm³ sample, which is stored at rest & used to evaluate settling, i.e. the height of the clear supernatant on top of the milk-of-lime is measured and expressed as ratio to the total height of the sample in the bottle.

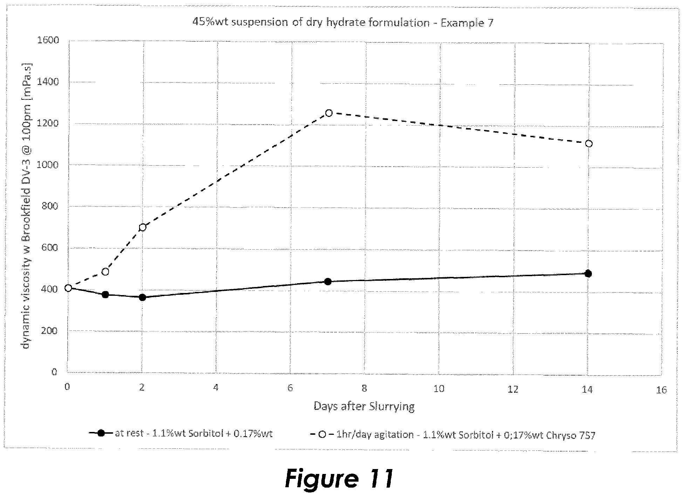

The viscosity measurement of sample ii hereabove have been plotted on Figure 11.

As can be seen from Figure 11, the viscosity of the suspension at rest remained stable at ca. 400mPa.s, while the one under agitation increased to more than 1000mPa.s within the first week.

### Comparative Example 2 (counter example).-

To produce a slurry having a solid content (high solids) of 45%, 1650 g of water is placed in a beaker of 5 dm³ and agitated with a propeller stirrer of 70mm diameter at 700 rpm. Then 9,5 g of fine sorbitol powder is added to the water and dissolved. Subsequently, 1350 g of the same lime source of dry high calcium hydrated lime of Example 1, but classified to <90 µm, are added in small portions over the course of 10 to 15 min. The agitation is continued for at least another 30 min, to ensure all lumps have broken up and a visually homogeneous suspension has been obtained.

The suspension is then passed through a 1.4ltr horizontal, rotary bead mill, filled to a level of 75% of free volume with yttrium-stabilize zirconium oxide milling beads of an average diameter of 1.2 µm and operated at a rotation speed of 1600 rpm, milling the suspension to a particle size distribution of D₅₀ of 2.6 µm µm and D₉₇ of 18.0 µm.

Then 5,4g of Chryso Neomere®tech 757 are added to the milled suspension under agitation by a propeller stirrer of 70mm diameter at 700 rpm during 5min for a dosage of 0.08wt% active (dry) polymer per wt dry hydrate. The agitation is maintained for 10min to ensure homogeneity of distribution.
The slurry is divided in 3 parts:
i. A 200 cm³ sample stored at rest for viscosity measurement over 2 weeks. The sample is shaken to homogeneity before measurement with a Brookfield DV3 Rheometer @ 100rpm using the suitable spindle.
ii. A 1 dm³ sample, which is agitated for 1h/day by revolution in a 'paint mixer', for viscosity measurement with the Brookfield DV-3 Rheometer over 2 weeks.
iii. A 1 dm³ sample, which is stored at rest & used to evaluate settling, i.e. the height of the clear supernatant on top of the milk-of-lime is measured and expressed as ratio to the total height of the sample in the bottle.

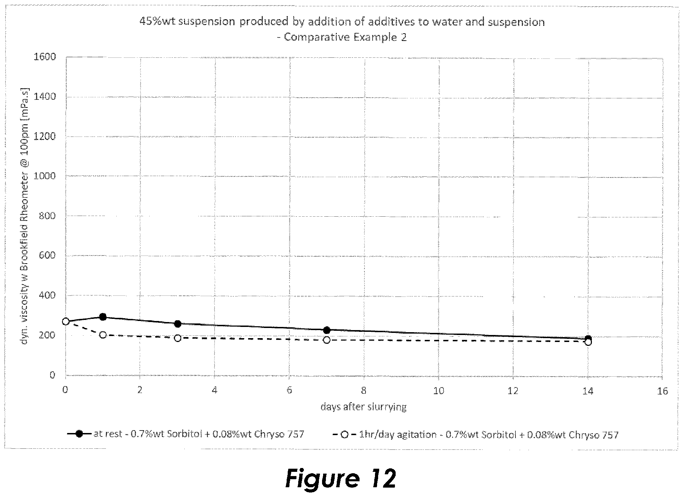

The viscosity measurement of sample ii hereabove have been plotted on Figure 12. The results of Comparative Example 2 and Example 7 plotted respectively on Figure 11 and Figure 12 clearly indicate, that results obtained by addition of the additives to the water or suspension, i.e. wet processing, are not comparable to the one of the invention in this case. The wet addition allows lower dosage of sorbitol and dispersant and provides higher stability, as should be expected from the improved distribution of the additive as is well-known to a person knowledgeable in the art.

Compared to the previous Example 1 and Comparative Example 1, we can thus conclude from Example 7 and Comparative Example 2, that the effect of the additives in a formulation according to our invention is thus additive-specific, i.e. invert sugar would be a more efficient additive than sorbitol.

## Claims

1. Ready-to-use powder formulation, for making a high solids highly reactive milk of lime having an improved stability and settling, comprising particles of high calcium lime,, an organic stabilizing agent in C4 to C₁₈ bearing one or more hydroxyl group(s) at an amount from 0.3 to 5 wt% and a dispersant polymer at an amount of 0.03 to 1.0 wt% based on the total weight of the ready-to-use powder formulation, said ready-to-use powder formulation containing at least 90wt% of high calcium lime based on the total weight of the ready-to-use powder formulation, said ready-to-use powder formulation having a d₉₇ ≤ 40 µm and a d₅₀ comprised between 2 and 15 µm.

2. Ready-to-use powder formulation for making a high solids highly reactive milk of lime having an improved stability and settling according to claim 1, having a silica content expressed in SiO₂ equivalent lower than 1.5 wt%, preferably lower than or equal to 1.1 wt%, particularly lower than or equal to 0.85 wt%, more preferably lower than or equal to 0.65 wt%, even more particularly lower than or equal to 0.54 wt% based on the total weight of the ready-to-use powder formulation.

3. Ready-to-use powder formulation for making a high solids highly reactive milk of lime having an improved stability and settling according to claim 1 or claim 2, having an aluminum content expressed in Al2O₃ equivalent lower than 0.4 wt%, preferably lower than or equal to 0.35 wt%, more preferably lower than or equal to 0.30 wt%, even more particularly lower than or equal to 0.25 wt% based on the total weight of the ready-to-use powder.

4. Ready-to-use powder formulation for making a high solids highly reactive milk of lime having an improved stability and settling according to any of the claims 1 to 3, , having an sulfur content expressed in SO₃ equivalent lower than 0.5 wt%, preferably lower than or equal to 0.4 wt%, more preferably lower than or equal to 0.30 wt%, even more particularly lower than or equal to 0.25 wt% based on the total weight of the ready-to-use powder.

5. Ready-to-use powder formulation for making a high solids highly reactive milk of lime having an improved stability and settling according to any of the claims 1 to 4, having a specific surface area measured by manometric nitrogen adsorption and calculated using the Brunauer, Emmett and Teller model (BET method) after degassing 2 h at 190°C comprised between 5 and 45 m²/g, more preferably between 7 and 30 m²/g, more particularly between 8 and 25 m²/g.

6. Ready-to-use powder formulation for making a high solids highly reactive milk of lime having an improved stability and settling according to any of the claims 1 to 45, having a flowability comprised in the range of 1.2 to 2.0.

7. Ready-to-use powder formulation for making a high solids highly reactive milk of lime having an improved stability and settling according to any of the claims 1 to 6, having a moisture content comprised between 0.2 and 3 wt%, preferably between 0.3 and 2 wt% based on the total weight of the powder formulation as measured by infra-red thermobalance at 150°C or thermogravimetric analysis at the same temperature.

8. Ready-to-use powder formulation for making a milk of lime having an improved stability according to any of the claims 1 to 7, wherein said organic stabilizing agent in C4 to C₁₈ bearing one or more hydroxyl groups is chosen amongst an uronic or aldonic acid of a carbohydrate, e.g., sodium gluconate, or a polyol, or a carbohydrate chosen amongst a monosaccharide, a disaccharide, an oligosaccharide or a polysaccharide or combination thereof.

9. Ready-to-use powder formulation for making a milk of lime having an improved stability according to any of the claims 1 to 5, wherein said dispersant polymer is a water-soluble polymer preferably having an active polycarboxylate ether concentration of at least 10 wt%, more preferably of at least 15 wt% and even more preferably of at least 20 wt%.

10. Process for manufacturing a ready-to-use powder formulation for making a high solids highly reactive milk of lime having an improved stability and settling comprising the steps of
• providing a predetermined amount of high calcium lime having a particle size distribution with a d₉₇ ≤ 40 µm and a d₅₀ comprised between 2 and 15 µm in an agitated unit.
• A first addition of an organic stabilizing agent in C4 to C₁₈ bearing one or more hydroxyl group(s) at an amount from 0.3 to 5 wt% relative to the total weight of the ready-to-use powder formulation, and
• A second addition of a dispersant polymer at an amount of 0.03 to 1.0 wt% active polymer, i.e. based on non-volatile content relative to the total weight of the ready-to-use powder formulation, and
• Collecting a ready -to-use powder formulation for making a high solids highly reactive milk of lime having an improved stability and settling.

11. Process for manufacturing a ready-to-use powder formulation for making a high solids highly reactive milk of lime having an improved stability and settling according to claim 11, wherein said high calcium lime is a hydrated lime, said process further comprising a step of agitating said predetermined amount of high calcium lime by activating said agitated unit for obtaining a moving high calcium lime, at least one amongst the first and second addition being performed to said moving high calcium lime.

12. Process for manufacturing a ready-to-use powder formulation for making a high solids highly reactive milk of lime having an improved stability and settling according to claim 11, further comprising a preliminary slaking step of quicklime to obtain a high calcium lime saving said particle size distribution.

13. Process for manufacturing a ready-to-use powder formulation for making a high solids highly reactive milk of lime having an improved stability and settling according to claim 13, wherein the first addition is performed before, during of after said slaking step.

14. Process for manufacturing a ready-to-use powder formulation for making a high solids highly reactive milk of lime having an improved stability and settling according to claim 13 or 14, wherein the second addition is performed before, during or after said slaking step.

15. Process for manufacturing a ready-to-use powder formulation for making a high solids highly reactive milk of lime having an improved stability and settling according to any of the claims 10 to 15, wherein said polymer is added under a solid form or under a form of a suspension or solution.

16. Process for manufacturing a ready-to-use powder formulation for making a high solids highly reactive milk of lime having an improved stability and settling according to any of the claims 10 to 16, wherein said organic stabilizing agent is added under a solid form or under a form of a suspension or solution.
